# EUROPEAN PATENT APPLICATION

(11) **EP 4 520 718 A1**
(43) Date of publication of application: **12.03.2025**
(21) Application number: 23799492.6
(22) Date of filing: 01.05.2023
(51) Int. Cl.: C01B 32/05, B01D 53/86, C01B 32/40, C21B 5/00, F27D 17/00

(54) **PRODUCTION DEVICE FOR CARBON MATERIAL, PRODUCTION SYSTEM FOR CARBON MATERIAL, CARBON CIRCULATION SYSTEM, PRODUCTION METHOD FOR CARBON MATERIAL, AND CARBON CIRCULATION METHOD**

(30) Priority: 02.05.2022 JP 2022075977; 02.05.2022 JP 2022075978; 02.05.2022 JP 2022075979; 02.05.2022 JP 2022075980
(71) Applicant: SEKISUI CHEMICAL CO., LTD., Osaka-shi Osaka 530-8565 (JP)
(72) Inventor: DASANAYAKE ALUTHGE, Rasika, Tsukuba-shi, Ibaraki 300-4292 (JP); YAGIHASHI, Noritoshi, Tsukuba-shi, Ibaraki 300-4292 (JP); IIJIMA, Keisuke, Tsukuba-shi, Ibaraki 300-4292 (JP); NAKAMA, Yuki, Tsukuba-shi, Ibaraki 300-4292 (JP)
(74) Representative: Alpspitz IP
(86) International application number: PCT/JP2023/017050
(87) International publication number: WO 2023/214563

(57) **Abstract**

Summary

[Problem] To provide a production device for a carbon material, a production system for a carbon material, and a production method for a carbon material that make it possible to efficiently produce a carbon material from carbon dioxide.

[Solution] One aspect of the present invention provides a production device for a carbon material. The production device comprises a first reaction unit that produces carbon monoxide from carbon dioxide, a second reaction unit that produces a carbon material from carbon monoxide, and a gas line that connects the first reaction unit and the second reaction unit. The first reaction unit has at least one reactor that contains a reducing agent. By contact with a starting material gas that includes carbon dioxide, the reducing agent reduces the carbon dioxide to carbon monoxide and is oxidized, and by contact with a reducing gas that includes a reducing substance, the oxidized reducing agent is reduced.

## Description

### BACKGROUND

The present disclosure relates to a carbon material manufacturing apparatus, a carbon material manufacturing system, a carbon cycle system, a carbon material manufacturing method and a carbon cycle method.

### RELATED ART

Carbon materials have been widely used as conductive materials for electronic devices and filler materials for tires and ink.

For example, Patent Document 1 discloses a method for manufacturing a carbon material by combustion of coal. However, it is considered that, in such a method, a large amount of carbon dioxide (CO₂) is contained in gas from which the carbon material is separated in a final step.

There is a concern that, if this separated gas is emitted directly into the atmosphere, concentration of carbon dioxide in the atmosphere is increased, thereby contributing to the global warming.

In recent years, lithium-ion secondary batteries have been developed. In addition, in order to enhance characteristics of lithium-ion secondary batteries, active materials used for positive electrodes and negative electrodes are also keenly examined.

For example, Patent Document 2 discloses a method for manufacturing a carbon-based negative electrode active material that is superior in accepting lithium ions. As the method of Patent Document 2, a method including: pulverizing petroleum-based or coal-based coke; adjusting particle sizes; and then performing heat treatment is disclosed.

For example, a carbon material manufactured by the method disclosed in Patent Document 1 can also be used as the above carbon-based negative electrode active material. However, such a method is afraid of increasing the concentration of carbon dioxide in the atmosphere and contributing to the global warming, as described above.

Conventionally, in smelting, coke as a reductant is fed into a smelting furnace together with mineral ore as a raw material, so that the mineral ore is melted to extract the target metal. Coke is generally manufactured from coal (see Patent Document 2).

Coal is a kind of fossil fuel, and a large amount of carbon dioxide is generated when it is combusted. If emitting this carbon dioxide directly into the atmosphere, the concentration of carbon dioxide in the atmosphere is afraid of being increased and contributing to the global warming.

### PRIOR ART DOCUMENTS

### Patent document

[Patent Document 1] JP 2014-19620 A
[Patent Document 2] WO 2009/022664
[Patent document 3] JP 2021-50279 A

### SUMMARY

### Problems to be Solved by Invention

In light of the above-described problems, the present disclosure provides a carbon material manufacturing apparatus, a carbon material manufacturing system and a carbon material manufacturing method, which can manufacture a carbon material efficiently from carbon dioxide.

In addition, according to the keen study of the inventors of the present disclosure, a carbon-based negative electrode active material manufactured from coke contains a relatively low amount of an impurity (solid impurity) due to a relatively low content of the impurity in the coke itself. For the further improvement of the characteristics of the lithium-ion secondary battery, it is preferable that the content of the solid impurity in the carbon-based negative electrode active material (carbon material) is smaller. In addition, in its manufacture, low load on the environment is also preferable.

Then, in light of the above-described problems, the inventors of the present disclosure have provided a carbon material manufacturing apparatus and the like, which can manufacture a carbon material with an extremely small content of the solid impurity, while preventing the environmental load.

Further, in light of the above-described problems, the present disclosure provides a carbon cycle system and a carbon cycle method, which can manufacture a target metal efficiently by using the carbon material generated from exhaust gas. Means for Solving Problems

According to an aspect of the present disclosure, a carbon material manufacturing apparatus is provided. This manufacturing apparatus includes: a first reaction unit configured to generate carbon monoxide from carbon dioxide; a second reaction unit configured to generate a carbon material from the carbon monoxide; and a gas line connecting the first reaction unit and the second reaction unit. The first reaction unit includes at least one reactor storing a reductant. The reductant is allowed to contact source gas containing the carbon dioxide so as to reduce the carbon dioxide to convert the carbon dioxide into the carbon monoxide and to convert the reductant itself into an oxidized state, and the reductant in the oxidized state is then reduced by the contact with the reduction gas.

According to the above-described aspect, the carbon material can be efficiently manufactured from carbon dioxide.

According to another aspect of the present disclosure, the carbon material manufacturing apparatus is provided. This apparatus includes: a first reaction unit configured to generate carbon monoxide from carbon dioxide; a second reaction unit configured to generate a carbon material from the carbon monoxide; a gas line connecting the first reaction unit and the second reaction unit; and a pressure adjustment unit configured to be provided in middle of the gas line and increase pressure of gas passing through the gas line.

According to the above-described aspect, the carbon material can be efficiently manufactured from carbon dioxide.

According to another aspect of the present disclosure, the carbon material manufacturing apparatus is provided. This apparatus includes: a first reaction unit configured to generate carbon monoxide from carbon dioxide; a second reaction unit configured to generate a carbon material from the carbon monoxide. The content of the solid impurity in the carbon material is 1% by mass or less.

According to such an aspect, the carbon material with the extremely low content of the impurity can be manufactured, while preventing the environmental load. In addition, the effective use of such exhaust gas can save its emission, thereby realizing the circular economy (material recycling society).

According to still another aspect of the present disclosure, the carbon cycle system is provided. This reductant includes: a first reaction unit configured to generate carbon monoxide from carbon dioxide contained in the exhaust gas; a second reaction unit configured to generate a carbon material from the carbon monoxide; and a smelting furnace configured to be supplied with mineral ore together with the carbon material and smelt the mineral ore. The first reaction unit has at least one reactor which accommodates a reduced object that converts carbon dioxide into carbon monoxide by a reduction reaction caused by the contact with exhaust gas, and can separate at least a part of oxygen elements eliminated from the carbon dioxide, in a system of the reduction reaction. The reduced object is a reductant which reduces carbon dioxide by contact with the exhaust gas so as to convert the carbon dioxide into carbon monoxide and convert itself into an oxidized state, and the reductant in the oxidized state is a reductant which is reduced by contact with reduction gas that contains a reductant material.

According to such an aspect, the carbon material generated from the exhaust gas can be used to manufacture target metal efficiently. In addition, the effective use of such exhaust gas can save its emission, thereby realizing the circular economy (material recycling society).

### BRIEF DESCRIPTION OF DRAWINGS

[FIG. 1] FIG. 1 is a schematic view illustrating a configuration of a first embodiment of a carbon material manufacturing system of the present disclosure.
[FIG. 2] FIG. 2 is a schematic view illustrating a configuration of the first embodiment of a first reactor.
[FIG. 3] FIG. 3 is a schematic view illustrating a configuration of a second embodiment of a carbon material manufacturing system of the present disclosure.
[FIG. 4] FIG.4 is a schematic view illustrating a configuration of a third embodiment of a carbon material manufacturing system of the present disclosure.
[FIG. 5] FIG. 5 is a schematic view illustrating a configuration of a fourth embodiment of a first reactor.
[FIG. 6] FIG. 6 is a schematic view illustrating a configuration of a fifth embodiment of a carbon material manufacturing system of the present disclosure.
[FIG. 7] FIG. 7 is a schematic view illustrating a configuration of a sixth embodiment of a carbon material manufacturing system of the present disclosure.
[FIG. 8] FIG. 8 is a schematic view illustrating a configuration of a seventh embodiment a carbon material manufacturing system of the present disclosure.
[FIG. 9] FIG. 9 is a schematic view illustrating a configuration of a first embodiment of a carbon cycle system of the present disclosure.
[FIG. 10] FIG. 10 is a schematic view illustrating a configuration of a second embodiment of a carbon cycle system of the present disclosure.
[FIG. 11] FIG. 11 is a schematic view illustrating a configuration of a third embodiment of a carbon cycle system of the present disclosure.
[FIG. 12] FIG. 12 is a schematic view illustrating a configuration of a fourth embodiment of a carbon cycle system of the present disclosure.

### DETAILED DESCRIPTION

Description of a carbon material manufacturing apparatus, a carbon material manufacturing system, a carbon cycle system, a carbon material manufacturing method and a carbon cycle method of the present disclosure will be provided below in detail by way of preferred embodiments illustrated in the attached drawings.

### <Carbon material manufacturing system>

Firstly, the carbon material manufacturing system of the present disclosure will be described.

### <<First embodiment>>

Firstly, a first embodiment of a carbon material manufacturing system of the present disclosure will be described.

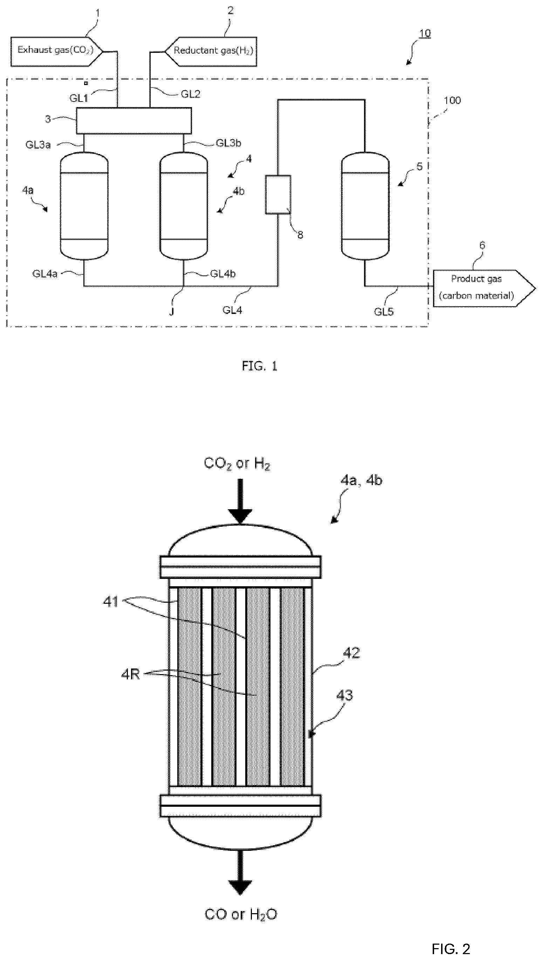

FIG. 1 is a schematic view illustrating a configuration of the first embodiment of the carbon material manufacturing system of the present disclosure. FIG. 2 is a schematic view illustrating a configuration of a first reactor in the first embodiment.

The carbon material manufacturing system 10 illustrated in FIG. 1 is a system for manufacturing a carbon material, and includes: a carbon material manufacturing apparatus 100 (hereinafter, simply referred to as the "manufacturing apparatus 100"); an exhaust gas supply unit 1 which is connected to the manufacturing apparatus 100 and supplies exhaust gas (source gas containing carbon dioxide); and a reductant gas supply unit 2 that supplies reductant gas.

Incidentally, in the present specification, an upstream side along a flow direction of gas is also described simply as an "upstream side", and a downstream side along the flow direction of the gas is also described simply as a "downstream side".

The exhaust gas supply unit 1 is not limited particularly, and may be, for example, a COₓ emission source of at least one business operation selected from trash burning sites, paper factories, cement factories, steel works, refineries, thermal power plants, oil refineries, ethylene crackers, oil factories, chemical plants, etc. Among them, as the exhaust gas supply unit 1, a furnace (for example, a combustion furnace, a blast furnace or a converter furnace) attached to steel works, a refinery or a thermal power plant is preferable. In the furnace, gas containing carbon dioxide is generated during combustion, melting, refining and the like of contents thereof.

In the case of a combustion furnace (incinerator) in a trash burning site, examples of the contents (waste) include plastic waste, kitchen waste, municipal waste (MSW), waste tires, biomass waste, household trash (futon cushion, paper, etc.), construction materials, etc. Incidentally, such waste may contain one kind alone, two kinds or more of them.

The exhaust gas generally contains not only carbon dioxide but also other gas components such as nitrogen, oxygen, carbon monoxide, water vapor, methane and the like. Concentration of carbon dioxide contained in the exhaust gas is not limited particularly, but, considering production costs of product gas (conversion efficiency into the carbon material), the concentration thereof is preferably 1% by volume or more, and more preferably 5% by volume or more.

In the case of the exhaust gas from a combustion furnace in a trash burning site, carbon dioxide is contained by 5% by volume or more and 15% by volume or less, nitrogen is contained by 60% by volume or more and 70% by volume or less, oxygen is contained by 5% by volume or more and 10% by volume or less, and water vapor is contained by 15% by volume or more and 25% by volume or less.

The exhaust gas from a blast furnace (blast furnace gas) is gas generated while manufacturing pig iron in the blast furnace, and contains carbon dioxide by 5% by volume or more and 45% by volume or less, nitrogen by 55% by volume or more and 60% by volume or less, carbon monoxide by 10% by volume or more and 40% by volume or less, and hydrogen by 1% by volume or more and 10% by volume or less.

Further, the exhaust gas from a converter furnace is gas generated while manufacturing steel in the converter furnace, and contains carbon dioxide by 15% by volume or more and 20% by volume or less, carbon monoxide by 50% by volume or more and 80% by volume or less, nitrogen by 15% by volume or more and 25% by volume or less, and hydrogen by 1% by volume or more and 5% by volume or less.

Incidentally, as the exhaust gas, pure gas containing 100% by volume of carbon dioxide may be used.

However, if using the exhaust gas, carbon dioxide which has conventionally been emitted into the atmosphere can be used effectively, thereby reducing the load on the environment. Among them, in the light of the carbon cycle, the exhaust gas containing carbon dioxide generated at steel works or refineries is preferred.

In addition, as the blast furnace gas or the converter furnace gas, untreated gas discharged from the furnace may be used directly as it is, and for example, treated gas (described below) after being treated for removing carbon monoxide and the like may also be used. The untreated blast furnace gas and converter furnace gas respectively have the above-described gas compositions, and the treated gas has a gas composition closer to the above-described composition of the exhaust gas from the combustion furnace. In the present specification, any kinds of the above-described gas (gas before being supplied to the manufacturing apparatus 100) are called as exhaust gas.

The reductant gas supply unit 2 is constituted of, for example, a hydrogen generator for generating hydrogen by electrolysis of water. To this hydrogen generator, a tank that stores water is connected.

By the hydrogen generator, a large amount of hydrogen can be generated easily at a relatively low cost. Also, the hydrogen generator has an advantage of being able to reuse condensed water that is generated in the manufacturing apparatus 100 (same as in the carbon cycle system 1000 described below). In addition, since the hydrogen generator consumes high electric energy, use of electric power as renewable energy is effective.

As the renewable energy, electric energy using at least one selected from solar power generation, wind power generation, hydroelectric power generation, wave power generation, tidal power generation, biomass power generation, geothermal power generation, solar heat and geothermal heat can be used.

Incidentally, as the hydrogen generator, a device for generating by-product hydrogen can also be used. As the device for generating by-product hydrogen, for example, devices for electrolyzing sodium chloride, devices for reforming petroleum with water vapor, devices for producing ammonia and the like can be exemplified.

Also, the reductant gas supply unit 2 can be a coke oven. In this case, exhaust gas from the coke oven may be used as the reductant gas. The exhaust gas from the coke oven can be used because of containing hydrogen and methane as main components, in particular, hydrogen by 50% by volume or more and 60% by volume or less.

The manufacturing apparatus 100 of the present embodiment is an apparatus for manufacturing the carbon material, and mainly includes a gas switching unit 3, two first reactors 4a and 4b (first reaction unit 4) and one second reactor (second reaction unit) 5.

The exhaust gas supply unit 1 is connected to the gas switching unit 3 via a gas line GL1, and the reductant gas supply unit 2 is connected to the gas switching unit 3 via a gas line GL2.

In the middle of each of gas lines GL1 and GL2, at least one of a temperature control unit for adjusting a temperature of gas passing therethrough, a pressurizing unit for pressurizing the gas, an impurity removal unit for removing an impurity from the gas and the like may also be disposed.

The gas switching unit 3 can be configured to include, for example, a branch gas line and a flow channel opening/closing mechanism such as a valve which is provided in the middle of this branch gas line.

The gas switching unit 3 is connected to inlet ports of the first reactors 4a and 4b via two gas lines GL3a and GL3b, respectively.

According to this configuration, the exhaust gas (source gas containing carbon dioxide) supplied from the exhaust gas supply unit 1 passes through the gas line GL1, the gas switching unit 3 and the gas lines GL3a and GL3b so as to be supplied to the first reactors 4a and 4b, respectively.

Whereas, the reductant gas containing hydrogen (reductant material) supplied from the reductant gas supply unit 2 passes through the gas line GL2, the gas switching unit 3 and the gas lines GL3a and GL3b, thereby supplying to the respective first reactors 4a and 4b.

The first reactors 4a and 4b can generate carbon monoxide from carbon dioxide (can convert carbon dioxide into carbon monoxide). As shown in FIG. 2, each of the first reactors 4a and 4b is constituted of a multi-pipe reaction apparatus (fixed bed-type reaction apparatus) including: plural pipes 41, each of which is filled with (accommodates) a reductant (reduced object) 4R; and a housing 42 in which the plurality pipes 41 are stored in an internal space 43. Such a multi-pipe reaction apparatus can secure sufficient opportunities for the reductant 4R, the exhaust gas and the reductant gas to contact each other. As a result, the conversion efficiency of carbon dioxide into carbon monoxide can be enhanced.

Incidentally, each of the first reactors 4a and 4b can also be constituted of a reactor, which omits the pipes 41, and includes the housing 42 in which the internal space 43 is filled with the reductant 4R (that is, a simple reactor).

For example, the reductant 4R of the present embodiment is preferably particles (granular), scales, pellets or the like. The reductant 4R with such a shape can enhance a packing efficiency in the pipes 41, and increase a contact area with the gas to be supplied into the pipes 41 further more.

In the case where the reductant 4R is particles, an average particle diameter thereof is not particularly limited, but is preferably 1 mm or more and 50 mm or less, and more preferably 1 mm or more and 30 mm or less. In this case, the contact area between the reductant 4R and the exhaust gas (carbon dioxide) can be further increased, thereby improving the conversion efficiency of carbon dioxide into carbon monoxide. Similarly, regeneration (reduction) of the reductant 4R by the reductant gas containing the reductant material can also be performed more efficiently.

The reductant 4R in the particle shape is preferably a molded body produced by rolling granulation, by which its spheroidicity can be increased.

Further, the reductant 4R may also be supported on a carrier.

A constituent material of the carrier is required to be hardly denatured by contact with the exhaust gas (oxidation gas) in reaction conditions or the like, and examples thereof include, for example, carbon materials (graphite, graphene, carbon black, carbon nanotubes, activated charcoal, etc.), carbides such as Mo₂C, zeolite, montmorillonite, oxides such as ZrO₂ , TiO₂ , V₂O₅, MgO, CeO₂, Al₂O₃ and SiO₂, composite oxides including them, and the like.

Among them, as the constituent material of the carrier, zeolite, montmorillonite, ZrO₂, TiO₂, V₂O₅, MgO, Al₂O₃, SiO₂ and the composite oxides including them are preferable. The carrier composed of such a material is preferable, because of not affecting negatively on the reaction of the reductant 4R and exhibiting an excellent performance of supporting the reductant 4R. Herein, the carrier does not interact with the reaction of the reductant 4R, but simply supports (holds) the reductant 4R.

As an example of such a form, a configuration in which at least a part of a surface of the carrier is covered with the reductant 4R can be exemplified.

The reductant 4R contains at least one of metal and metal oxide (an oxygen carrier with oxygen ion conductivity). At least one of the metal and the metal oxide is not limited particularly as long as it can reduce carbon dioxide, but preferably contains at least one kind selected from metal elements that belong to Group III to Group XIII, more preferably contains at least one kind selected from metal elements that belong to Group III to Group XII, further preferably contains at least one kind of lanthanum, titanium, vanadium, iron, copper, zinc, nickel, manganese, chromium, cerium and the like, and is particularly preferably a metal oxide or a composite metal oxide that contains iron and/or cerium. These metal oxides are useful because of their particularly high conversion efficiencies of carbon dioxide into carbon monoxide.

Herein, as the metal, a metal simple substance that contains only one kind of the above-described metallic elements and an alloy that contains two or more kinds of the above-described metallic elements are included.

Further, in each of the first reactors 4a and 4b, the reductant 4R (at least one of the metal and the metal oxide) may constitute the pipes (cylindrical molded bodies) 41 by itself. Furthermore, a block-shaped, lattice-shaped (for example, net-shaped or honeycomb-shaped) or other molded body may be made of the reductant 4R, and may be disposed in the housing 42. In these cases, the reductant 4R as a filler may be omitted, or other filler may be used together.

Among the above, the configuration in which the net-shaped body made of the reductant 4R and is disposed in the housing 42 is preferred. Such a configuration can prevent an increase of passing resistance of the exhaust gas and the reductant gas in each of the first reactors 4a and 4b, and can also secure sufficient opportunities for the reductant 4R to contact the exhaust gas and the reductant gas.

Incidentally, volumes of the two first reactors 4a and 4b are set to be substantially equal to each other, and can be set appropriately according to an amount of the exhaust gas to be treated (a size of the exhaust gas supply unit 1 and a size of the manufacturing apparatus 100). In addition, the volumes of the two first reactors 4a and 4b may be different according to the kinds of the exhaust gas and the reductant gas, the performance of the reductant 4R or the like.

According to the above configuration, by switching the gas lines (flow channels) by the gas switching unit 3, the exhaust gas can be supplied to, for example, the first reactor 4a that accommodates the reductant 4R before oxidation via the gas line GL3a, and the reductant gas can be supplied to the first reactor 4b that accommodates the reductant 4R after the oxidation via the gas line GL3b. At this time, a reaction represented by following Formula 1 proceeds in the first reactor 4a, and a reaction represented by following Formula 2 proceeds in the first reactor 4b.

Incidentally, in Formulae 1 and 2 below, a case in which the reductant 4R contains iron oxide (FeOₓ₋₁) will be shown as an example.

Formula 1: CO₂ + FeOₓ₋₁ → CO + FeOₓ

Formula 2: H₂ + FeOₓ → H₂O + FeOₓ₋₁

Thereafter, by switching the gas lines by the gas switching unit 3 reversely to the above, the reaction of above Formula 2 can proceed in the first reactor 4a, and the reaction of above Formula 1 can proceed in the first reactor 4b.

That is, the exhaust gas (source gas) and the reductant gas are switched to be supplied to the first reactor 4a and the first reactor 4b.

Incidentally, both of the reactions represented by above Formulae 1 and 2 are endothermic reactions. Thus, the manufacturing apparatus 100 (carbon material manufacturing system 10) preferably further include a reductant heating unit (not illustrated in FIG. 1) for heating the reductant 4R when allowing the reductant 4R to contact the exhaust gas or the reductant gas (that is, when the exhaust gas or the reductant gas is reacted with the reductant 4R).

By providing the reductant heating unit, a temperature of the reaction between the exhaust gas or the reductant gas and the reductant 4R can be maintained to be high so as to prevent or suppress the decrease of the conversion efficiency of carbon dioxide into carbon monoxide, and the regeneration of the reductant 4R by the reductant gas can be further promoted.

However, depending on the kind of the reductant 4R, the reactions represented by above Formulae 1 and 2 may be exothermic reactions. In this case, the manufacturing apparatus 100 preferably has a reductant cooling unit for cooling the reductant 4R as a replace of the reductant heating unit. By providing such a reductant cooling unit, deterioration of the reductant 4R during the reaction between the exhaust gas or the reductant gas and the reductant 4R can be favorably prevented, whereby the decrease of the conversion efficiency of carbon dioxide into carbon monoxide can be prevented or suppressed favorably, and the regeneration of the reductant 4R by the reductant gas can be further promoted.

That is, the manufacturing apparatus 100 is preferably provided with a reductant temperature control unit for adjusting the temperature of the reductant 4R depending on the kind of the reductant 4R (exothermic reaction or endothermic reaction).

The conversion ratio of carbon dioxide into carbon monoxide in the first reactors 4a and 4b is preferably 70% or more, more preferably 85% or more, and further preferably 95% or more. An upper limit of the conversion ratio of carbon dioxide into carbon monoxide is generally about 98%.

Such a conversion ratio can be set by adjusting the kind of the reductant 4R, the concentration of carbon dioxide contained in the exhaust gas, the kind of the reductant material, concentration of the reductant material contained in the reductant gas, temperatures of the first reactors 4a and 4b, flow rates (flow speed) of the exhaust gas and the reductant gas to the first reactors 4a and 4b, timing of switching between the exhaust gas and the reductant gas and the like.

The gas lines GL4a and GL4b are connected to outlet ports of the first reactors 4a and 4b respectively, and merge at a gas merge junction J so as to constitute a gas line GL4. Further, in the middle of each of the gas lines GL4a and GL4b, a valve (not shown) is provided as necessary.

For example, by adjusting an opening degree of each valve, passing speed of the exhaust gas and the reductant gas that pass through the first reactors 4a and 4b (that is, speed of processing the exhaust gas by the reductant 4R and speed of processing the reductant 4R by the reductant gas) can be set.

The gas line GL4 is connected to an inlet port of the second reactor 5. That is, the second reactor (second reaction unit) 5 is connected to the first reactors 4a and 4b (first reaction unit) via the gas lines GL4a and GL4b and the gas line GL4. Thereby, the gas discharged from the first reactors 4a and 4b can be supplied to the second reactor 5 as mixture gas.

The second reactor 5 can generate a carbon material from carbon monoxide (convert carbon monoxide into the carbon material). Specifically, the second reactor 5 generates the carbon material from the carbon monoxide contained in the mixture gas by a so-called Boudouard reaction as represented by following Formula 3.

Formula 3: 2CO ⇔ C + CO₂

For the second reactor 5, a similar reactor as explained for the first reactors 4a and 4b can be used. In this case, the pipe 41 is filled with one or more kinds of catalysts as follows. Examples of the catalysts include: (1) elements (simple substances or complexes) including tungsten, rhenium, osmium, tantalum, molybdenum, niobium, iridium, ruthenium, hafnium, technetium, rhodium, vanadium, chromium, zirconium, platinum, thorium, lutetium, titanium, palladium, protoactinium, thulium, scandium, iron, yttrium, erbium, cobalt, holmium, nickel, dysprosium, terbium, curium, gadolinium, beryllium, manganese, americium, promethium, uranium, copper, samarium, gold, actinium, neodymium, berkelium, silver, germanium, praseodymium, lanthanum, californium, calcium, europium, ytterbium, cerium, strontium, barium, radium, aluminum, magnesium, plutonium, neptunium, antimony, zinc, lead, cadmium, thallium, bismuth, polonium, tin, lithium, indium, sodium, potassium, rubidium, gallium, cesium, silicon or tellurium; (2) sulfide, boride, oxide, chloride, hydroxide, nitride and organometallic compounds of the above-described elements; (3) mixtures of either the above (1) or (2) with sulfur and/or sulfide (including organosulfur compounds); (4) mixtures of either the above (1) or (2) with boron and/or boride (including organoboron compounds); and the like.

In the middle of the gas line GL4, a pressure adjustment unit 8 for increasing pressure of the mixture gas that passes through the gas line GL4 is provided. By increasing the pressure of the mixture gas, equilibrium of the reaction represented by Formula 3 can be shifted (inclined) to the right, thereby further enhancing the generation efficiency of the carbon material.

Specifically, the pressure of the mixture gas after being pressurized by the pressure adjustment unit 8 is preferably 0.1 MPaG or more, more preferably 0.1 MPaG or more and 10 MPaG or less, further preferably 0.1 MPaG or more and 5 MPaG or less, particularly preferably 0.1 MPaG or more and 3 MPaG or less, and most preferably 0.1 MPaG or more and 2 MPaG or less. Incidentally, a lower limit of the pressure may be 0.2 MPaG or more, and may also be 0.5 MPaG or more. By adjusting the pressure of the mixture gas, the generation efficiency of the carbon material can be further enhanced.

The pressure adjustment unit 8 can be configured to include a valve, a pressure adjustment valve or the like. Incidentally, the pressure adjustment unit 8 may be provided as necessary, or may be omitted.

Incidentally, in the middle of the gas line GL4, a cooler for cooling the mixture gas and a gas-liquid separator (not shown) may be provided.

The cooler generates condensed water (liquid) by cooling the mixture gas.

Such a cooler has a configuration similar to those of the first reactors 4a and 4b, jacket-type cooling devices in which jackets for allowing a refrigerant to pass through are arranged around piping (see FIG. 2), and may be configured to include a multi-pipe cooling device in which the mixture gas passes inside pipes and a refrigerant passes around the pipes, an air fin cooler or the like.

The gas-liquid separator separates condensed water, which is generated when the mixed gas is cooled by the cooler, from the mixed gas. At this time, the condensed water has an advantage of dissolving and removing unnecessary gas components (in particular, the carbon dioxide) that remains in the mixture gas.

The gas-liquid separator can be constituted of, for example, a simple container, a swirl flow separator, a centrifugal separator, a surface tension separator or the like. Among them, the gas-liquid separator is preferably constituted of a simple container, for its simple structure, low cost and the like. In this case, on an air-liquid interface in the container, a filter that allows passage of gas but blocks passage of liquid may be disposed.

As described above, if removing water and the unnecessary gas components from the mixture gas, the mixture gas with higher concentration of the carbon monoxide can be supplied to the second reactor 5. Therefore, the decrease of the conversion efficiency of the carbon monoxide into the carbon material can be prevented or suppressed, whereby the generation amount of the carbon material can be further increased.

A second reaction temperature in the second reactor (second reaction unit) 5 is preferably lower than a first reaction temperature in the first reactors 4a and 4b (first reaction unit 4). In this case, heat of the reaction in the first reactors 4a and 4b can be used effectively in the second reactor 5.

Specifically, the second reaction temperature is preferably 850°C or less, more preferably 600°C or less, and further preferably 400°C or less. Thereby, while the generation efficiency of the carbon material can be improved, a utilization efficiency of the heat can also be increased.

To an outlet port of the second reactor 5, a gas line GL5 is connected.

To an end of the gas line GL5 opposite from the second reactor 5, a product gas discharge unit 6 for discharging product gas to an outside of the manufacturing apparatus 100 is connected.

Next, a method for using the carbon material manufacturing system 10 (carbon material manufacturing method) will be described.
[1] Firstly, by switching the gas line (flow channel) by the gas switching unit 3, the exhaust gas supply unit 1 is communicated with the first reactor 4a, and the reduction gas supply unit 2 is communicated with the first reactor 4b.
[2] Next, in this state, the exhaust gas is supplied from the exhaust gas supply unit 1 via the gas line GL1 to the first reactor 4a. In the first reactor 4a, the reductant 4R reduces the carbon dioxide so as to convert the carbon dioxide into carbon monoxide by contact with the exhaust gas (source gas containing carbon dioxide). At this time, the reductant 4R is converted into an oxidized state by the contact with the carbon dioxide.

The temperature (first reaction temperature) of the first reactor 4a (exhaust gas, reductant 4R) in above-described Step [2] is preferably 500°C or more, more preferably 650°C or more and 1100°C or less, and further preferably 700°C or more and 1000°C or less.

Further, the pressure (first reaction pressure) of the first reactor 4a (exhaust gas, reductant 4R) is preferably less than 1 MPaG, more preferably 0.9 MPaG or less, and further preferably 0.2 MPaG or more and 0.8 MPaG or less.

If the reaction conditions are set within the above ranges, for example, rapid decrease of temperature of the reductant 4R due to the endothermic reaction for converting the carbon dioxide into the carbon monoxide can be prevented or suppressed, whereby the reduction reaction of the carbon dioxide in the first reactor 4a can proceed more smoothly.

[3] In parallel to above Steps [1] to [2], water (material of the reductant gas) is supplied from a tank to the hydrogen generator (reductant gas supply unit 2) so as to generate hydrogen from the water.
[4] Next, the reductant gas containing the hydrogen is supplied from the hydrogen generator via the gas line GL2 to the first reactor 4b. In the first reactor 4b, the reductant 4R in the oxidized state is reduced (regenerated) by the contact with the reductant gas (hydrogen). At this time, water is produced. In this case, the hydrogen may be produced on site, or may be supplied from a pipeline or a cylinder after being purified at another location. A method for producing the hydrogen is not limited as long as it is green hydrogen. Also, the green hydrogen may be used as only a part of the hydrogen.

The temperature (reaction temperature) of the first reactor 4b (reductant gas, reductant 4R) in above Step [4] is preferably 500°C or more, more preferably 650°C or more and 1100°C or less, and further preferably 700°C or more and 1000°C or less.

Further, the pressure (first reaction pressure) of the first reactor 4b (reductant gas, reductant 4R) is preferably less than 1 MPaG, more preferably 0.9 MPaG or less, and further preferably 0.2 MPaG or more and 0.8 MPaG or less.

If the reaction conditions are set within the above ranges, for example, the rapid temperature decrease of the reductant 4R due to the endothermic reaction for reducing (regenerating) the reductant 4R in the oxidized state can be prevented or suppressed, whereby the reduction reaction of the reductant 4R in the first reactor 4b can proceed more smoothly.

In the embodiment, above Steps [2] to [4] constitute the first generation step for generating the carbon monoxide from the carbon dioxide.

[5] Next, the gas that has passed through the first reactors 4a and 4b merges together to generate mixture gas. At this point, a temperature of the mixture gas is generally 200°C or more and 1000°C or less. If the temperature of the mixture gas at this point is within the above range, it means that the temperature in the first reactors 4a and 4b is maintained at a sufficiently high temperature, so that it can be judged that the conversion of the carbon dioxide into the carbon monoxide by the reductant 4R and the reduction of the reductant 4R by the reductant gas are proceeding efficiently.

[6] Next, the mixture gas is allowed to pass through the pressure adjustment unit 8 via the gas line GL4. At this time, the pressure of the mixture gas is increased.

In the present embodiment, this Step [6] constitutes a pressure adjustment step of increasing the pressure of the gas (mixture gas) generated in the first generation step.
[7] Next, the mixture gas that has passed through the pressure adjustment unit 8 is supplied to the second reactor 5. In the second reactor 5, the carbon monoxide is converted into a carbon material.

In the present embodiment, this Step [7] constitutes a second generation step of generating the carbon material from carbon monoxide.

Then, the product gas (mixture gas) containing the carbon material is discharged from the product gas discharge unit 6 via the gas line GL5 to the outside of the manufacturing apparatus 100 so as to be subjected to a next step.

### <<Second embodiment>>

Next, a second embodiment of a carbon material manufacturing system of the present disclosure will be described.

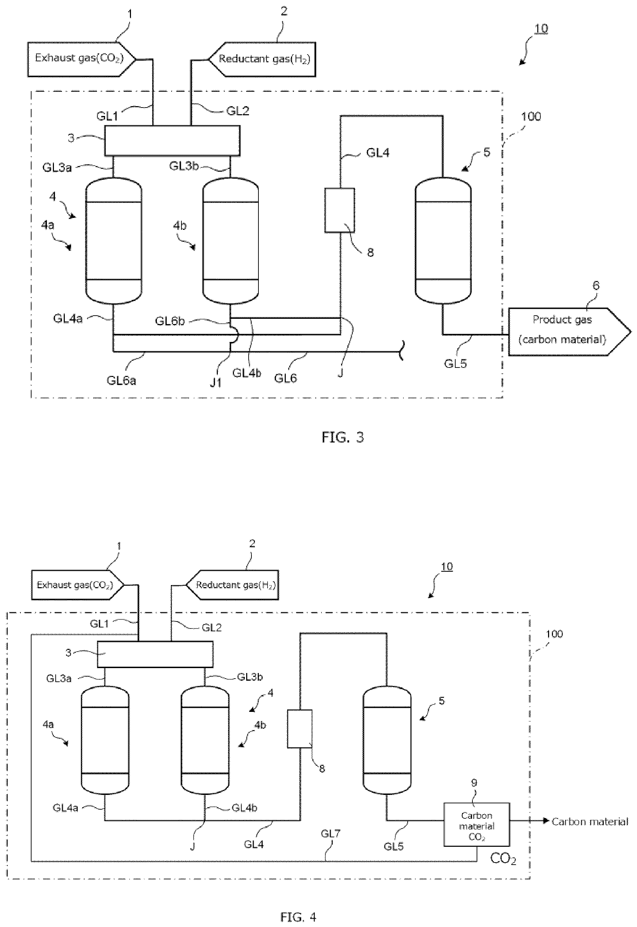

FIG. 3 is a schematic view illustrating a configuration of the second embodiment of the carbon material manufacturing system of the present disclosure.

Hereinafter, the carbon material manufacturing system 10 of the second embodiment will be described focusing on the differences from the carbon material manufacturing system 10 of the first embodiment, and explanation on the similar matters will be omitted.

In the second embodiment, gas lines GL6a and GL6b are branched off from middle of gas lines GL4a and GL4b respectively, and merge at a gas merge junction J1 so as to constitute a gas line GL6. In addition, switch valves are provided at branch portions between the gas lines GL4a and GL6a and between GL4b and GL6b, respectively.

The exhaust gas discharged from the first reactors 4a and 4b passes through the gas lines GL4a, GL4b and GL4, and is supplied to the second reactor 5. The reductant gas discharged from the first reactors 4a and 4b passes through the gas lines GL6a, GL6b and GL6, and is returned to the reductant gas supply unit 2, for example, after removal of water.

That is, the present embodiment provides the configuration to separate: the exhaust gas (source gas) after passing through the first reactors 4a and 4b; and the reductant gas after passing through the first reactors 4a and 4b.

Then, the exhaust gas after passing through the first reactors 4a and 4b is supplied to the second reactor 5 without merging with the reductant gas after passing through the first reactors 4a and 4b.

According to this configuration, the exhaust gas with reduced water contamination can be supplied to the second reactor 5. Therefore, the decrease of the conversion efficiency of the carbon monoxide into the carbon material can be prevented or suppressed, whereby the generation amount of the carbon material can be further increased.

### <<Third embodiment>>

Next, a third embodiment of a carbon material manufacturing system of the present disclosure will be described.

FIG.4 is a schematic view illustrating a configuration of the third embodiment of the carbon material manufacturing system of the present disclosure.

Hereinafter, the carbon material manufacturing system of the third embodiment will be described focusing on the differences from the carbon material manufacturing system 10 of the first embodiment, and explanation on the similar matters will be omitted.

The carbon material manufacturing system 10 of the third embodiment is provided with a collection unit 9 as a replace of the product gas discharge unit 6.

The collection unit 9 collects a carbon material from the gas (product gas) generated by the second reactor 5. This collection unit 9 can be configured to include one or more kinds of, for example, an elutriation device, a centrifugal separator, an electrostatic precipitator and a filter device in combination.

The collection unit 9 is connected to a gas line GL1 via a return gas line GL7. As described above, the second reactor 5 generates product gas, which contains carbon dioxide in addition to the carbon material, from carbon monoxide.

Therefore, the product gas passes through the collection unit 9, thereby separating the carbon material from the product gas containing carbon dioxide.

Then, the product gas after the collection of the carbon material by the collection unit 9 is returned to the first reactors 4a and 4b via a return gas line GL7 and the gas line GL1.

According to such a configuration, the product gas after passing through the collection unit 9 can be used effectively without being disposed. In particular, the product gas after passing through the collection unit 9 has sufficiently high concentration of the carbon dioxide, and thus can favorably prevent the decrease of the conversion efficiency of the carbon dioxide into carbon monoxide in the first reactors 4a and 4b, even if being mixed with the exhaust gas.

Incidentally, in the first reactors 4a and 4b described above, when the exhaust gas (source gas) contacts the reductant 4R, carbon monoxide is generated by the reduction reaction of the carbon dioxide, and at least a part of oxygen elements eliminated from the carbon dioxide is trapped by the reductant 4R and is subsequently delivered to hydrogen (reductant material) when the reductant gas contacts the reductant 4R, thereby generating water (oxide of the reductant material). That is, in the first reactors 4a and 4b, at least a part of the oxygen elements can be separated in a system of the reduction reaction (reaction field) of the carbon dioxide.

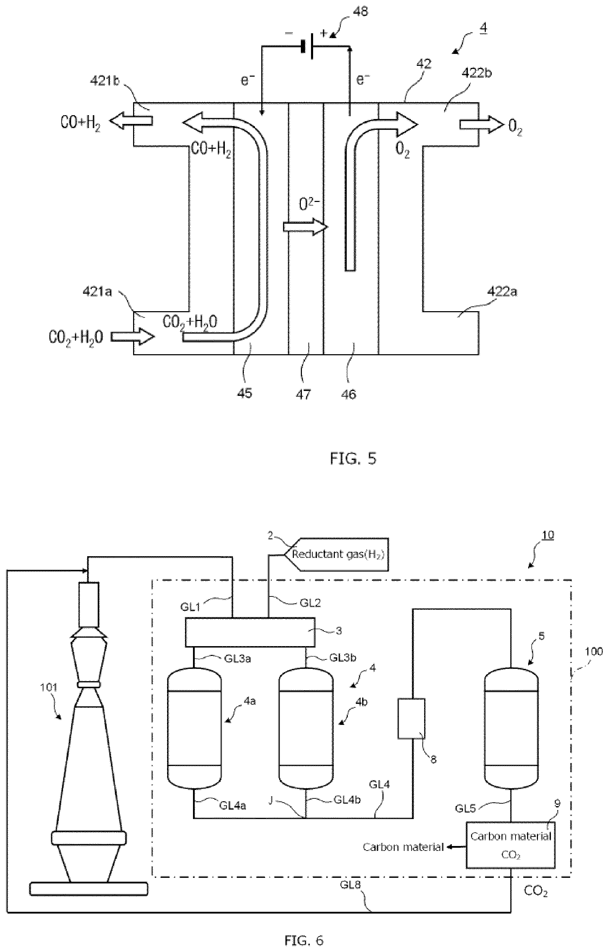

The reactor that can separate at least a part of the oxygen elements in the system of the reduction reaction of the carbon dioxide can also adopt the configuration illustrated in FIG. 5.

### <<Fourth embodiment>>

Next, a fourth embodiment of a carbon material manufacturing system of the present disclosure will be described.

FIG. 5 is a schematic view illustrating a configuration of a first reactor in the fourth embodiment.

Hereinafter, the carbon material manufacturing system 10 of the fourth embodiment will be described focusing on the differences from the carbon material manufacturing system 10 of the first to third embodiments, and explanation on the similar matters will be omitted.

The first reaction unit 4 shown in FIG. 5 is constituted of a reactor (also referred to as a reaction cell, an electrolytic bath or an electrochemical cell) in which the reduction reaction of carbon dioxide is supported out electrochemically.

The first reaction unit 4 includes: a housing 42; a cathode 45, an anode 46 and a solid electrolyte layer 47 which are provided in the housing 42; and a power supply 48 which is electrically connected to the cathode 45 and the anode 46.

In such a configuration, space in the housing 42 is divided into left and right sides by a laminate of the cathode (reductant) 45, the anode 46 and the solid electrolyte layer 47.

The housing 42 includes a cathode-side inlet port 421a, a cathode-side outlet port 421b, an anode-side inlet port 422a and an anode-side outlet port 422b. The cathode-side inlet port 421a and the cathode-side outlet port 421b are communicated with a cathode chamber in the left-side space inside the housing 42, and the anode-side inlet port 422a and the anode-side outlet port 422b are communicated with an anode chamber in a right-side space inside the housing 42.

Each of the cathode 45 and the anode 46 is configured to include a carrier having conductivity and a catalyst supported on this carrier.

The carrier can be constituted of a carbon material such as, for example, carbon fiber fabric (carbon cloth, carbon felt, etc.) or carbon paper.

Further, as the catalyst, for example, platinum group metal such as platinum, ruthenium, rhodium, palladium, osmium and iridium; transition metal such as gold; alloy of the above-described metal; alloy of the above-described metal with other metal; and the like can be exemplified.

The solid electrolyte layer 47 can be constituted of: for example, a fluorine-based polymer film (such as Nafion (registered trademark)) having a sulfonic acid group; a sulfo-based ion exchange resin film; or the like.

As the power supply 48, a power supply that generates electric power as renewable energy is preferably used. Thereby, an energy efficiency in the production of the product gas that contains a carbon valuable can be further enhanced.

In the first reaction unit 4, when the exhaust gas (carbon dioxide and water) is supplied from the cathode-side inlet port 421a, carbon monoxide and hydrogen are generated by the reduction reaction of carbon dioxide and water, and oxygen ions are generated simultaneously, due to action by electrons supplied from the power supply 48 and the catalyst.

The carbon monoxide and the hydrogen are discharged from the cathode-side outlet port 421b to the gas line (gas line GL4), and the oxygen ions are diffused in the solid electrolyte layer 47 toward the anode 46. Electrons of the oxygen ions that reach the anode 46 are withdrawn from the oxygen ions, whereby the oxygen ions are converted into oxygen, which are discharged from the anode-side outlet port 422b.

In such a configuration, the carbon monoxide and the hydrogen discharged from the cathode-side outlet port 421b are supplied to the second reactor 5. In this case, in the middle of the gas line GL4, a removal unit for removing the hydrogen may be provided.

Further, the carbon material manufacturing system 10 may also configured to cause a reaction of below Formula 4 in the first reaction unit 4 and cause a reaction of below Formula 5 in the second reaction unit 5.

Formula 4: CO₂ + H₂ → CO + H₂O

Formula 5: CO + H₂ → C + H₂O

In other words, the carbon material manufacturing system 10 may be configured to cause a Bosch reaction through the first reaction unit 4 and the second reaction unit 5. Incidentally, the reactions of Formulae 4 and 5 may be caused simultaneously.

In this case, as each of the first reaction unit 4 and the second reaction unit 5, not only a reaction apparatus (heat exchanger) similar to those explained for the first reactors 4a and 4b, but also a plate-type reaction apparatus, a plate fin-type reaction apparatus, a helical reaction apparatus and the like can be used.

Further, the usable catalyst preferably contains at least one kind selected from metal elements belonging to Group II to Group XV, and more preferably contains at least one kind selected from metal elements belonging to Group V to Group X, and further preferably contains at least one kind of nickel, molybdenum, chromium, cobalt, tungsten, vanadium, ruthenium, iridium, iron and the like.

A first reaction temperature in the first reaction unit 4 is preferably 400°C or more and 1200°C or less, more preferably 500°C or more and 1000°C or less, further preferably 600°C or more and 800°C or less, and particularly preferably 680°C or more and 700°C or less.

First reaction pressure in the first reaction unit 4 is preferably 0.1 MPaG or more and 5 MPaG or less, more preferably 0.2 MPaG or more and 4.5 MPaG or less, further preferably 0.25 MPaG or more and 4 MPaG or less, and particularly preferably 0.3 MPaG or more and 3.5 MPaG or less.

A second reaction temperature in the second reaction unit 5 is preferably 400°C or more and 1000°C or less, more preferably 450°C or more and 900°C or less, further preferably 500°C or more and 800°C or less, and particularly preferably 550°C or more and 700°C or less.

Second reaction pressure in the second reaction unit 5 is preferably 0.1 MPaG or more and 5 MPaG or less, more preferably 0.2 MPaG or more and 4.5 MPaG or less, further preferably 0.25 MPaG or more and 4 MPaG or less, and particularly preferably 0.3 MPaG or more and 3.5 MPaG or less.

### <<Fifth embodiment>>

Next, a fifth embodiment of a carbon material manufacturing system of the present disclosure will be described.

FIG. 6 is a schematic view illustrating a configuration of the fifth embodiment of the carbon material manufacturing system of the present disclosure.

Hereinafter, the carbon material manufacturing system 10 of the fifth embodiment will be described focusing on the differences from the carbon material manufacturing system 10 of the first to fourth embodiments, and explanation on the similar matters will be omitted.

The carbon material manufacturing system 10 illustrated in FIG. 6 is a system for manufacturing a carbon material, and includes: a manufacturing apparatus 100; a blast furnace (gas supply unit) 101 which is connected to the manufacturing apparatus 100 and supplies exhaust gas (source gas containing carbon dioxide); and a reductant gas supply unit 2 which supplies the reductant gas.

Incidentally, in the present specification, an upstream side along a flow direction of gas is also described simply as an "upstream side", and a downstream side along the flow direction of the gas is also described simply as a "downstream side". In addition, in the present specification, "refining" which is performed to increase purity of metal is also included in "smelting".

In the present embodiment, the gas supply unit will be explained as the blast furnace (a furnace associated with a smelting plant) 101, but the gas supply unit may also be other furnace associated with a smelting plant. As the other preferable furnace, a shaft furnace, a converter furnace, an electric furnace and the like can be exemplified. Further, the gas supply unit can have a configuration similar to that of the exhaust gas supply unit 1 described above.

The blast furnace (smelting furnace) 101 is connected to a gas switching unit 3 via a gas line GL1, and the reductant gas supply unit 2 is connected to a gas switching unit 3 via a gas line GL2.

Therefore, in the present embodiment, the exhaust gas supply unit 1 in the first to fourth embodiments can be read as the blast furnace 101.

To an outlet port of a second reactor 5, a gas line GL5 is connected.

In the present embodiment, as a replace of the above-described product gas discharge unit 6, a collection unit 9 is connected to an end of the gas line GL5 opposite from the second reactor 5.

The collection unit 9 collects a carbon material from the gas (product gas) generated by the second reactor 5. This collection unit 9 can be configured to include one or more of, for example, an elutriation device, a centrifugal separator, an electrostatic precipitator and a filter device in combination.

The collection unit 9 is connected to the gas line GL1 via a return gas line GL8. As described above, the second reactor 5 generates product gas, which contains carbon dioxide in addition to the carbon material, from the carbon monoxide.

Therefore, the product gas is separated into the carbon material and the product gas containing the carbon dioxide, by passing through the collection unit 9.

Then, the product gas after the collection of the carbon material by the collection unit 9 is returned to the first reactors 4a and 4b via a return gas line GL8 and the gas line GL1.

According to such a configuration, the product gas after passing through the collection unit 9 can be effectively used without being disposed. As a result, a discharge amount of the carbon dioxide can be reduced, thereby realizing the circular economy (material recycling society). In particular, the product gas after passing through the collection unit 9 has sufficiently high concentration of the carbon dioxide, and thus can favorably prevent the decrease of the conversion efficiency of the carbon dioxide into carbon monoxide in the first reactors 4a and 4b, even if being mixed with the exhaust gas.

In addition, according to the above configuration, the carbon material with extremely low content of a solid impurity is generated. Specifically, the content of the solid impurity in the carbon material is 1% by mass or less, preferably 0.1% by mass or less, and more preferably 0.01% by mass. A lower limit of the content of the solid impurity in the carbon material is not particularly limited, but is generally 0.001% by mass or more. The carbon material with such a low content of the solid impurity can be used in various electronic devices, molded items and the like to prevent degradation of their characteristics.

For example, as the solid impurity, at least one kind of, for example, copper, zinc, iron, nickel, aluminum, chromium and alloys containing them can be exemplified.

Such a carbon material is used favorably for at least one of a secondary battery material (for example, a negative electrode active material, a conductive assistant for negative electrodes or positive electrodes), a filler for tires, a coloring agent for resin materials or rubber materials, a UV protector and absorbent, a fuel cell electrode material and a heat dissipation agent.

For example, if using the carbon material for a negative electrode active material of an ion secondary battery, occurrence of a short circuit in a short period of time, deterioration of charge-discharge characteristics and the like of the ion secondary battery can be prevented.

For example, if using the carbon material for a filler for tires, time degradation of elasticity and flexibility of the tires can be suppressed more favorably.

Next, a method for using the carbon material manufacturing system 10 (carbon material manufacturing method) will be described.
[11] Firstly, a step similar to above Step [1] is performed.
[12] Next, a step similar to above Step [2] is performed.

A temperature (first reaction temperature) of the first reactor 4a (exhaust gas, reductant 4R) in above Step [12] is preferably set similarly to that in above Step [2].

Further, pressure (first reaction pressure) of the first reactor 4a (exhaust gas, reductant 4R) is also preferably set similarly to that in above Step [2].

[13] A step similar to above Step [3] is performed.
[14] A step similar to above Step [4] is performed.

A temperature (reaction temperature) of the first reactor 4b (exhaust gas, reductant 4R) in above Step [14] is preferably set similarly to that in above Step [4].

Further, pressure (first reaction pressure) of the first reactor 4b (exhaust gas, reductant 4R) is also preferably set similarly to that in above Step [4].

[15] Next, a step similar to above Step [5] is performed.

[16] Next, a step similar to above Step [6] is performed.
[17] Next, a step similar to above Step [7] is performed.

Then, in this embodiment, product gas (mixture gas) containing the carbon material is discharged to the collection unit 9 via the gas line GL5.

[18] Next, in the collection unit 9, the carbon material is separated and collected from the product gas that contains the carbon material. As mentioned above, the content of the solid impurity in the carbon material is less than 1% by mass or less.
[19] Next, the product gas after the collection of the carbon material by the collection unit 9 is returned to the first reactors 4a and 4b via the return gas line GL8 and the gas line GL1.

This exhaust gas undergoes above-described Steps [11] to [17], whereby the carbon material is generated again.

### <<Sixth embodiment>>

Next, a sixth embodiment of a carbon material manufacturing system of the present disclosure will be described.

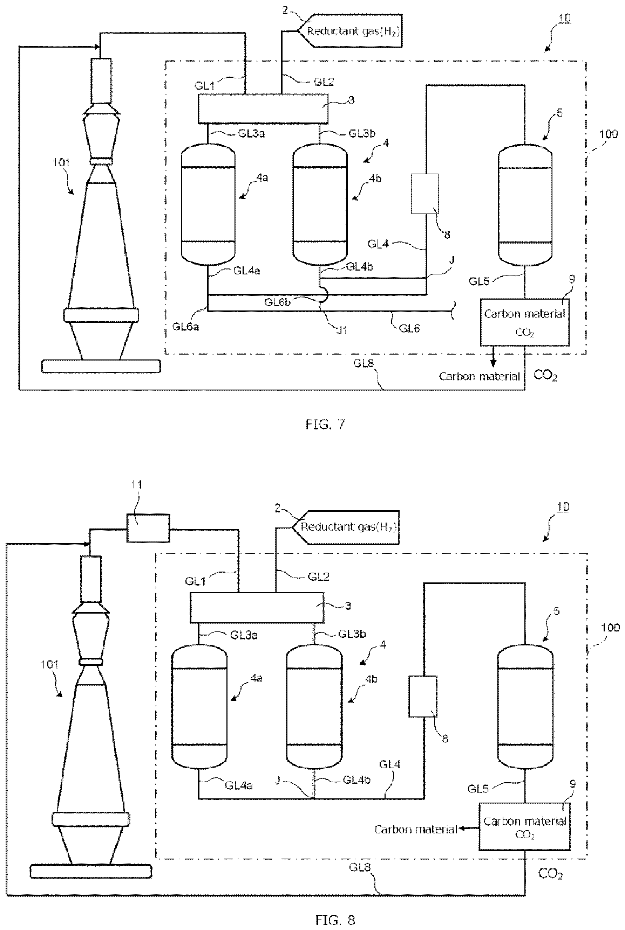

FIG. 7 is a schematic view illustrating a configuration of the sixth embodiment of the carbon material manufacturing system of the present disclosure.

Hereinafter, the carbon material manufacturing system 10 of the sixth embodiment will be described focusing on the differences from the carbon material manufacturing system 10 of the fifth embodiment, and explanation on the similar matters will be omitted.

In the sixth embodiment, gas lines GL6a and GL6b are branched off from middle of gas lines GL4a and GL4b respectively, and merge at a gas merge junction J1 so as to constitute a gas line GL6. In addition, switch valves are provided at branch portions between the gas lines GL4a and GL6a and between GL4b and GL6b, respectively.

The exhaust gas discharged from the first reactors 4a and 4b passes through the gas lines GL4a, GL4b and GL4, and is supplied to the second reactor 5. The reductant gas discharged from the first reactors 4a and 4b passes through the gas lines GL6a, GL6b and GL6, and is returned to the reductant gas supply unit 2, for example, after removal of water.

That is, the present embodiment provides the configuration to separate: the exhaust gas after passing through the first reactors 4a and 4b; and the reductant gas after passing through the first reactors 4a and 4b.

Then, the exhaust gas after passing through the first reactors 4a and 4b is supplied to the second reactor 5 without merging with the reductant gas after passing through the first reactors 4a and 4b.

According to this configuration, the exhaust gas with reduced water contamination can be supplied to the second reactor 5. Therefore, the decrease of the conversion efficiency of the carbon monoxide into the carbon material can be prevented or suppressed, whereby the generation amount of the carbon material can be further increased.

### <<Seventh embodiment>>

Next, a seventh embodiment of a carbon material manufacturing system of the present disclosure will be described.

FIG. 8 is a schematic view illustrating a configuration of the seventh embodiment of the carbon material manufacturing system of the present disclosure.

Hereinafter, the carbon material manufacturing system 10 of the seventh embodiment will be described focusing on the differences from the carbon material manufacturing system 10 of the fifth embodiment, and explanation on the similar matters will be omitted.

The carbon material manufacturing system 10 of the seventh embodiment is provided with a separation unit 11 for separating carbon dioxide from exhaust gas in the middle of a gas line GL1 (on an upstream side of a first reaction unit 4).

By allowing the exhaust gas to pass through the separation unit 11, concentration of carbon dioxide in the exhaust gas can be increased. Thereby, a conversion efficiency of the carbon dioxide into carbon monoxide in the first reactors 4a and 4b can be further increased.

As a method for separating the carbon dioxide from the exhaust gas, for example, a separator in a low-temperature separation system (cryogenic system), a separator in a pressure swing adsorption (PSA) system, a separator in a membrane separation system, a separator in a temperature swing adsorption (TSA) system, an amine absorption separator, an amine adsorption separator and the like can be exemplified, and one kind alone or two kinds or more among them can be used in combination.

In the fifth to seventh embodiments described above, in the first reactors 4a and 4b, when the exhaust gas contacts the reductant 4R, carbon monoxide is generated by the reduction reaction of the carbon dioxide, and at least a part of oxygen elements eliminated from the carbon dioxide is trapped by the reductant 4R and is subsequently delivered to hydrogen (reductant material) when the reductant gas contacts the reductant 4R, thereby generating water (oxide of the reductant material). That is, in the first reactors 4a and 4b, at least a part of the oxygen elements can be separated in a system of the reduction reaction (reaction field) of the carbon dioxide.

The reactor that can separate at least a part of the oxygen elements in the system of the reduction reaction of the carbon dioxide can also adopt the configuration illustrated in FIG. 5.

### <Carbon cycle system>

Secondly, a carbon cycle system of the present disclosure will be described.

### <<First embodiment>>

Firstly, a first embodiment of a carbon cycle system of the present disclosure will be described.

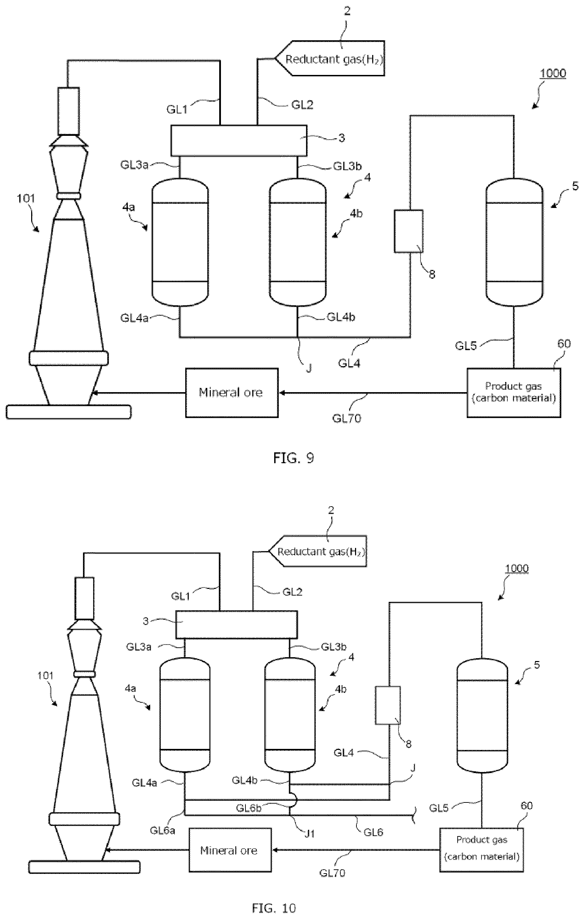

FIG. 9 is a schematic view illustrating a configuration of the first embodiment of the carbon cycle system of the present disclosure.

Hereinafter, a carbon cycle system 1000 will be described focusing on the differences from the carbon material manufacturing system 10 of the first to fourth embodiments, and explanation on the similar matters will be omitted.

The carbon cycle system 1000 illustrated in FIG. 9 is a system for manufacturing (smelting) target metal, and includes: a blast furnace (smelting furnace) 101 which supplies exhaust gas (gas containing carbon dioxide); and a reductant gas supply unit 2 which supplies reductant gas.

Incidentally, in the present specification, an upstream side along a flow direction of gas is also described simply as an "upstream side", and a downstream side along the flow direction of the gas is also described simply as a "downstream side". In addition, in this present specification, "refining" which is performed to increase purity of metal is also included in "smelting".

The present embodiment adopts a configuration of using the exhaust gas discharged from the blast furnace 101, and the blast furnace 101 may be, for example, a furnace attached to steel works or a refinery. Other preferable furnaces include a shaft furnace, a converter furnace, an electric furnace and the like. In each furnace, exhaust gas is generated when melting and refining contents thereof. The exhaust gas generally contains, in addition to carbon dioxide and carbon monoxide, other gas components such as nitrogen, oxygen, water vapor, methane and the like.

The exhaust gas (blast furnace gas) from the blast furnace 101 is, for example, gas generated during manufacture of pig iron in the blast furnace 101, and contains: carbon dioxide by 5% by volume or more and 45% by volume or less; nitrogen by 55% by volume or more and 60% by volume or less; carbon monoxide by 10% by volume or more and 40% by volume or less; and hydrogen by 1% by volume or more and 10% by volume or less.

Further, the exhaust gas (converter furnace gas) from the converter furnace is gas generated during manufacture of steel in the converter furnace, and contains: carbon dioxide by 15% by volume or more and 20% by volume or less; carbon monoxide by 50% by volume or more and 80% by volume or less; nitrogen by 15% by volume or more and 25% by volume or less; and hydrogen by 1% by volume or more and 5% by volume or less.

If using such exhaust gas, carbon dioxide which has conventionally been emitted into the atmosphere can be used effectively, thereby reducing the load on the environment and enhancing the degree of the material cycle.

In addition, as the blast furnace gas or the converter furnace gas, untreated gas discharged from the furnace may be used directly as it is, and for example, treated gas after being treated for removing carbon monoxide and the like may be used. In the present specification, either of the above described gas is referred to as exhaust gas.

The carbon cycle system 1000 of the present embodiment further includes a gas switching unit 3, two first reactors 4a and 4b (first reaction unit 4) and one second reactor (second reaction unit) 5.

The blast furnace (smelting furnace) 101 is connected to the gas switching unit 3 via a gas line GL1, and the reductant gas supply unit 2 is connected to the gas switching unit 3 via a gas line GL2.

Therefore, in the present embodiment, the exhaust gas supply unit 1 in the carbon material manufacturing system 10 can be read as the blast furnace 101.

In the present embodiment, a second reaction temperature in the second reactor (second reaction unit) 5 is preferably lower than a first reaction temperature in the first reactors 4a and 4b (first reaction unit 4). In this case, heat of the reaction in the first reactors 4a and 4b can be used effectively in the second reactor 5.

Specifically, the second reaction temperature is preferably 850°C or less, more preferably 800°C or less, and further preferably 750°C or less. Thereby, while the generation efficiency of the carbon material can be improved, a utilization efficiency of the heat can also be increased. Incidentally, a lower limit of the second reaction temperature is generally 600°C or more.

To an outlet port of the second reactor 5, a gas line GL5 is connected.

To an end of the gas line GL5 opposite from the second reactor 5, a product gas supply unit 60 is connected.

This product gas supply unit 60 is configured to supply product gas (carbon material) via a gas line GL70 to mineral ore that is a raw material for smelting.

Then, the mineral ore mixed with the carbon material (that is, the mineral ore together with the carbon material) is supplied to the blast furnace (smelting furnace) 101 and then refined. In other words, in the present embodiment, the blast furnace 101 used for the smelting and the blast furnace 101 for collecting the exhaust gas are identical. According to such a configuration, the carbon dioxide can be used for the smelting without being emitted into the external environment, thereby realizing the circular economy (material recycling society).

Next, a method for using the carbon cycle system 1000 (carbon cycle method) will be described.
[21] Firstly, a step similar to above Step [1] is performed.
[22] Next, a step similar to above Step [2] is performed.

A temperature (first reaction temperature) of the first reactor 4a (exhaust gas, reductant 4R) in above Step [22] is preferably set similarly to that in above Step [2].

Further, pressure (first reaction pressure) of the first reactor 4a (exhaust gas, reductant 4R) is also preferably set similarly to that in above Step [2].

[23] A step similar to above Step [3] is performed.
[24] A step similar to above Step [4] is performed.

A temperature (reaction temperature) of the first reactor 4b (exhaust gas, reductant 4R) in above Step [24] is preferably set similarly to that in above Step [4].

Further, pressure (first reaction pressure) of the first reactor 4b (exhaust gas, reductant 4R) is also preferably set similarly to that in above Step [4].

[25] Next, a step similar to above Step [5] is performed.

[26] Next, a step similar to above Step [6] is performed.
[27] Next, a step similar to above Step [7] is performed.

Then, in this embodiment, product gas (mixture gas) containing the carbon material is discharged to the product gas supply unit 60 via the gas line GL5.

[28] Next, the product gas containing the carbon material is supplied from the product gas supply unit 60 via the gas line GL70 to the mineral ore and is mixed therewith. Thereby, the carbon material is supported on the mineral ore.
[29] Next, in this state, the mineral ore is supplied to the blast furnace 101 together with coke and the like as necessary. Thereby, in the blast furnace 101, the target metal is separated from the mineral ore and is collected. At this time, exhaust gas containing carbon dioxide is generated. This Step [29] constitutes a smelting process for supplying the mineral ore together with the carbon material and smelting the mineral ore.

This exhaust gas undergoes above-described Steps [21] to [27], whereby the carbon material is generated again.

### <<Second embodiment>>

Next, a second embodiment of a carbon cycle system of the present disclosure will be described.

FIG. 10 is a schematic view illustrating a configuration of the second embodiment of the carbon cycle system of the present disclosure.

Hereinafter, the carbon cycle system 1000 of the second embodiment will be described focusing on the differences from the carbon cycle system 1000 of the first embodiment, and explanation on the similar matters will be omitted.

In the second embodiment, gas lines GL6a and GL6b are branched off from middle of gas lines GL4a and GL4b respectively, and merge at a gas merge junction J1 so as to constitute a gas line GL6. In addition, switch valves are provided at branch portions between the gas lines GL4a and GL6a and between GL4b and GL6b, respectively.

The exhaust gas discharged from the first reactors 4a and 4b passes through the gas lines GL4a, GL4b and GL4, and is supplied to the second reactor 5. The reductant gas discharged from the first reactors 4a and 4b passes through the gas lines GL6a, GL6b and GL6, and is returned to the reductant gas supply unit 2, for example, after removal of water.

That is, the present embodiment provides the configuration to separate: the exhaust gas after passing through the first reactors 4a and 4b; and the reductant gas after passing through the first reactors 4a and 4b.

Then, the exhaust gas after passing through the first reactors 4a and 4b is supplied to the second reactor 5 without merging with the reductant gas after passing through the first reactors 4a and 4b.

According to this configuration, the exhaust gas with reduced water contamination can be supplied to the second reactor 5. Therefore, the decrease of the conversion efficiency of the carbon monoxide into the carbon material can be prevented or suppressed, whereby the generation amount of the carbon material can be further increased.

### <<Third embodiment>>

Next, a third embodiment of a carbon cycle system of the present disclosure will be described.

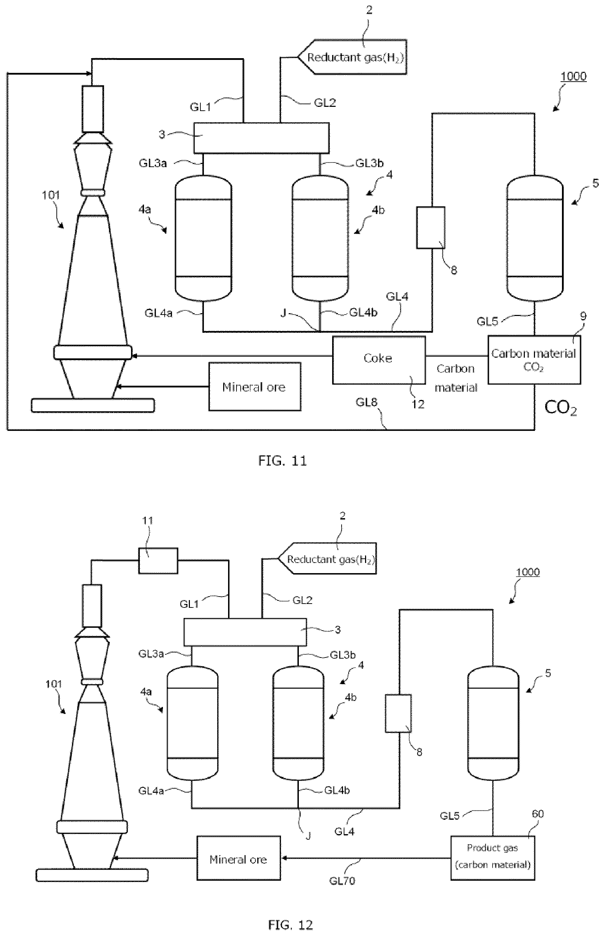

FIG. 11 is a schematic view illustrating a configuration of the third embodiment of the carbon cycle system of the present disclosure.

Hereinafter, the carbon cycle system 1000 of the third embodiment will be described focusing on the differences from the carbon cycle system 1000 of the first embodiment, and explanation on the similar matters will be omitted.

The carbon cycle system 1000 of the third embodiment is provided with a collection unit 9 as a replace of the product gas supply unit 60.

The collection unit 9 collects a carbon material from the gas (product gas) generated in the second reactor 5. This collection unit 9 can be configured to include one or more kinds of, for example, an elutriation device, a centrifugal separator, an electrostatic precipitator and a filter device in combination.

The collection unit 9 is connected to the gas line GL1 via a return gas line GL8. As described above, the second reactor 5 generates product gas, which contains carbon dioxide in addition to the carbon material, from the carbon monoxide.

Therefore, the product gas is separated into the carbon material and the product gas containing the carbon dioxide, by passing through the collection unit 9.

Then, the product gas after the collection of the carbon material by the collection unit 9 is returned to the first reactors 4a and 4b via a return gas line GL70 and the gas line GL1.

According to such a configuration, the product gas after passing through the collection unit 9 can be effectively used without being disposed. In particular, the product gas after passing through the collection unit 9 has sufficiently high concentration of the carbon dioxide, and thus can favorably prevent the decrease of the conversion efficiency of the carbon dioxide into carbon monoxide in the first reactors 4a and 4b, even if being mixed with the exhaust gas.

The carbon cycle system 1000 of the third embodiment is further provided with a compression unit 12 that compresses the carbon material collected by the collection unit 9. The carbon material is compressed to form a compressed product, which is supplied to a blast furnace 101 together with mineral ore. That is, the compressed product can be used as a substitute for coke. The carbon material obtained as described above can smelt metal with high quality, because of its low impurity content.

The compression unit 12 can be constituted of, for example, a pelletizing device (tableting device) or the like.

A shape of the compressed product is preferably, for example, spherical, polyhedral or the like. If using the compressed product with such a shape, flow of the gas and melt of the mineral ore in the blast furnace 101 can be promoted. From this viewpoint, a maximum length (for example, a diameter) between two points of an outer shape in a cross-section of the compressed product is preferably 10 mm or more and 100 mm or less, and 20 mm or more and 80 mm or less.

When forming the compressed product, a mixture of the carbon material with fine ore, limestone or the like may be used.

### <<Fourth embodiment>>

Next, a fourth embodiment of a carbon cycle system of the present disclosure will be described.

FIG. 12 is a schematic view illustrating a configuration of the fourth embodiment of the carbon cycle system of the present disclosure.

Hereinafter, the carbon cycle system 1000 of the fourth embodiment will be described focusing on the differences from the carbon cycle system 1000 of the first embodiment, and explanation on the similar matters will be omitted.

The carbon cycle system 1000 of the fourth embodiment is provided with a separation unit 11 that separates carbon dioxide from exhaust gas in the middle of a gas line GL1 (on an upstream side of a first reaction unit 4).

By allowing the exhaust gas to pass through the separation unit 11, concentration of the carbon dioxide in the exhaust gas can be increased. Thereby, a conversion efficiency of the carbon dioxide into carbon monoxide in the first reactors 4a and 4b can be further increased.

As a method for separating carbon dioxide from the exhaust gas, for example, a separator in a low-temperature separation system (cryogenic system), a separator in a pressure swing adsorption (PSA) system, a separator in a membrane separation system, a separator in a temperature swing adsorption (TSA) system, an amine absorption separator, an amine adsorption separator and the like can be exemplified, and one kind alone or two kinds or more among them can be used in combination.

In the first to fourth embodiments described above, in the first reactors 4a and 4b, when the exhaust gas contacts the reductant 4R, carbon monoxide is generated by the reduction reaction of the carbon dioxide, and at least a part of oxygen elements eliminated from the carbon dioxide is trapped by the reductant 4R and is subsequently delivered to hydrogen (reductant material) when the reductant gas contacts the reductant 4R, thereby generating water (oxide of the reductant material). That is, in the first reactors 4a and 4b, at least a part of the oxygen elements can be separated in a system of the reduction reaction (reaction field) of the carbon dioxide.

The reactor that can separate at least a part of the oxygen elements in the system of the reduction reaction of the carbon dioxide can also adopt the configuration illustrated in FIG. 5.

According to the carbon material manufacturing apparatus, the carbon material manufacturing method, and the carbon material manufacturing system as described above, the carbon material can be efficiently manufactured from carbon dioxide.

In particular, by adopting a chemical looping method to generate carbon monoxide from carbon dioxide, the conversion efficiency into carbon monoxide (conversion ratio) can be enhanced, so that the generation efficiency of carbon monoxide, i.e., the generation efficiency of the carbon material can be enhanced sufficiently.

In addition, in the case of increasing the pressure of the gas supplied at an early stage of the second reaction unit, the generation efficiency of the carbon material can be enhanced sufficiently.

Furthermore, according to the carbon material manufacturing apparatus, the carbon material manufacturing system and the carbon material manufacturing method as described above, the carbon material with extremely low content of the solid impurity can be manufactured.

In particular, the carbon material to be generated can be used for various applications because of its low content of the solid impurity.

According to the carbon cycle system and the carbon cycle method as described above, the target metal can be manufactured efficiently, by using the carbon material generated from the exhaust gas.

In particular, since the carbon material to be generated has the low content of the impurity, quality of the metal to be smelted can also be improved.

In addition, the present disclosure may be provided in each of the following aspects.

(1A) A carbon material manufacturing apparatus, comprising: a first reaction unit configured to generate carbon monoxide from carbon dioxide; a second reaction unit configured to generate a carbon material from the carbon monoxide; and a gas line connecting the first reaction unit and the second reaction unit, wherein the first reaction unit includes at least one reactor storing a reductant, the reductant is allowed to contact source gas containing the carbon dioxide so as to reduce the carbon dioxide to convert the carbon dioxide into the carbon monoxide and to convert the reductant itself into an oxidized state, and the reductant in the oxidized state is reduced by contact with reduction gas that contains a reductant material.

(2A) The carbon material manufacturing apparatus according to (1A), wherein the first reaction unit includes a plurality of the reactor, and the material gas and the reductant gas are switched to be supplied to each of the reactor.

(3A) The carbon material manufacturing apparatus according to (2A), configured to separate: the source gas after passing through the reactor; and the reductant gas after passing through the reactor.

(4A) The carbon material manufacturing apparatus according to (3A), wherein the source gas after passing through the reactor is supplied to the second reaction unit.

(5A) The carbon material manufacturing apparatus according to any one of (1A) to (4A), further comprising a collection unit configured to collect the carbon material from gas generated by the second reaction unit.

(6A) The carbon material manufacturing apparatus according to (5A), wherein the second reaction unit generates carbon dioxide in addition to the carbon material from the carbon monoxide, the carbon material manufacturing apparatus further comprising a return gas line configured to: connect the collection unit and the first reaction unit; and return gas after the collection of the carbon material by the collection unit to the first reaction unit.

(7A) The carbon material manufacturing apparatus according to any one of (1A) to (6A), further comprising a pressure adjustment unit configured to be provided in middle of the gas line and increase pressure of gas passing through the gas line.

(8A) The carbon material manufacturing apparatus according to (7A), wherein pressure of the gas after being pressurized by the pressure adjustment unit is 0.1 MPaG or more.

(9A) The carbon material manufacturing apparatus according to (7A) or (8A), wherein a second reaction temperature in the second reaction unit is lower than a first reaction temperature in the first reaction unit.

(10A) The carbon material manufacturing apparatus according to (9A), wherein the second reaction temperature is 850°C or less.

(11A) A carbon material manufacturing system, comprising: the carbon material manufacturing apparatus according to any one of (1A) to (10A); and a gas supply unit configured to be connected to the carbon material manufacturing apparatus and supply source gas containing carbon dioxide.

(12A) A carbon cycle system, comprising: the carbon material manufacturing apparatus according to any one of (1A) to (10A); and a smelting furnace configured to be supplied with mineral ore together with the carbon material and smelt the mineral ore, wherein the first reaction unit is configured to generate the carbon monoxide from the carbon dioxide contained in exhaust gas.

(13A) The carbon cycle system according to (12A), wherein the carbon material in a state of being supported on the mineral ore is supplied to the smelting furnace.

(14A) The carbon cycle system according to (12A) or (13A), further comprising a compression unit configured to compress the carbon material so as to obtain a compressed product, wherein the compressed product is supplied to the smelting furnace together with the mineral ore.

(15A) The carbon cycle system according to any one of (12A) to (14A), further comprising a separation unit configured to be provided on an upper stream side of the first reaction unit and separate the carbon dioxide from the exhaust gas.

(16A) The carbon cycle system according to any one of claims (12A) to (15A), wherein the exhaust gas is gas discharged from a smelting furnace that is identical to the said smelting furnace.

(17A) A carbon material manufacturing method, comprising: a first generation step of generating carbon monoxide from carbon dioxide; and a second generation step of generating a carbon material from the carbon monoxide; wherein the first generation step includes: allowing source gas that contains the carbon dioxide to contact a reductant so as to reduce the carbon dioxide to convert the carbon dioxide into the carbon monoxide and to convert the reductant into an oxidized state; and allowing reductant gas that contains a reductant material to contact the reductant in the oxidized state so as to reduce the reductant.

(18A) The carbon material manufacturing method according to (17A), further comprising a pressure adjustment step of increasing pressure of gas generated in the first generation step, in advance of the second generation step.

(19A) A carbon cycle method, comprising: the carbon material manufacturing method according to (17); and a smelting step including supplying mineral ore together with the carbon material that is generated in the second generation step, and smelting the mineral ore.

(1B) A carbon material manufacturing apparatus, comprising: a first reaction unit configured to generate carbon monoxide from carbon dioxide; a second reaction unit configured to generate a carbon material from the carbon monoxide; a gas line connecting the first reaction unit and the second reaction unit; and a pressure adjustment unit configured to be provided in middle of the gas line and increase pressure of gas passing through the gas line.

(2B) The carbon material manufacturing apparatus according to (1B), wherein pressure of the gas after being pressurized by the pressure adjustment unit is 0.1 MPaG or more.

(3B) The carbon material manufacturing apparatus according to (1B) or (2B), wherein a second reaction temperature in the second reaction unit is lower than a first reaction temperature in the first reaction unit.

(4B) The carbon material manufacturing apparatus according to (3B), wherein the second reaction temperature is 850°C or less.

(5B) The carbon material manufacturing apparatus according to any one of claims (1B) to (4B), wherein the first reaction unit has at least one reactor which accommodates a reduced object that converts carbon dioxide into carbon monoxide by a reduction reaction caused by the contact with the source gas containing the carbon dioxide, and can separate at least a part of oxygen elements eliminated from the carbon dioxide, in a system of the reduction reaction.

(6B) The carbon material manufacturing apparatus according to (5B), the reduced object is a reductant which reduces the carbon dioxide by contact with the source gas so as to convert the carbon dioxide into carbon monoxide and convert itself into an oxidized state, and the reductant in the oxidized state is a reductant which is reduced by contact with reduction gas that contains a reductant material.

(7B) The carbon material manufacturing apparatus according to (6B), the first reaction unit includes a plurality of the reactor, and the material gas and the reductant gas are switched to be supplied to each of the reactor.

(8B) The carbon material manufacturing apparatus according to (7B), configured to separate: the source gas after passing through the reactor; and the reductant gas after passing through the reactor.

(9B) The carbon material manufacturing apparatus according to (8B), the source gas after passing through the reactor is supplied to the second reaction unit.

(10B) The carbon material manufacturing apparatus according to any one of (1B) to (9B), further comprising a collection unit configured to collect the carbon material from gas generated by the second reaction unit.

(11B) The carbon material manufacturing apparatus according to (10B), wherein the second reaction unit generates carbon dioxide in addition to the carbon material from the carbon monoxide, the carbon material manufacturing apparatus further comprising a return gas line configured to: connect the collection unit and the first reaction unit; and return gas after the collection of the carbon material by the collection unit to the first reaction unit.

(12B) A carbon material manufacturing system, comprising: the carbon material manufacturing apparatus according to any one of (1B) to (11B); and a gas supply unit configured to be connected to the carbon material manufacturing apparatus and supply source gas containing carbon dioxide.

(13B) A carbon material manufacturing method, comprising: a first generation step of generating carbon monoxide from carbon dioxide; a second generation step of generating a carbon material from the carbon monoxide; and a pressure adjustment step of increasing pressure of gas generated in the first generation step, in advance of the second generation step.

(1C) A carbon material manufacturing apparatus comprising: a first reaction unit configured to generate carbon monoxide from carbon dioxide; a second reaction unit configured to generate a carbon material from the carbon monoxide, wherein a content of the solid impurity in the carbon material is 1% by mass or less.

(2C) The carbon material manufacturing apparatus according to (1C), wherein the first reaction unit has at least one reactor which accommodates a reduced object that converts carbon dioxide into carbon monoxide by a reduction reaction caused by the contact with the source gas containing the carbon dioxide, and can separate at least a part of oxygen elements eliminated from the carbon dioxide, in a system of the reduction reaction.

(3C) The carbon material manufacturing apparatus according to (2C), wherein the reduced object is a reductant which reduces the carbon dioxide by contact with the source gas so as to convert the carbon dioxide into carbon monoxide and convert itself into an oxidized state, and the reductant in the oxidized state is a reductant which is reduced by contact with reduction gas that contains a reductant material.

(4C) The carbon material manufacturing apparatus according to (3C), the first reaction unit includes a plurality of the reactor, and the material gas and the reductant gas are switched to be supplied to each of the reactor.

(5C) The carbon material manufacturing apparatus according to (4C), configured to separate: the source gas after passing through the reactor; and the reductant gas after passing through the reactor.

(6C) The carbon material manufacturing apparatus according to (5C), the source gas after passing through the reactor is supplied to the second reaction unit.

(7C) The carbon material manufacturing apparatus according to any one of (1C) to (6C), further comprising a collection unit configured to collect the carbon material from gas generated by the second reaction unit.

(8C) The carbon material manufacturing apparatus according to (7C), wherein the second reaction unit generates carbon dioxide in addition to the carbon material from the carbon monoxide, the carbon material manufacturing apparatus being configured to return gas after the collection of the carbon material by the collection unit to the first reaction unit via a return gas line that connects the collection unit and the first reaction unit.

(9C) The carbon material manufacturing apparatus according to any one of (1C) to (8C), wherein the carbon material is used for at least one of a secondary battery material, a filler for tires, a coloring agent for resin materials or rubber materials, a UV protector and absorbent, a fuel cell electrode material and a heat dissipation agent.

(10C) A carbon material manufacturing system, comprising: the carbon material manufacturing apparatus according to any one of (1C) to (9C); and a gas supply unit configured to be connected to the carbon material manufacturing apparatus and supply source gas containing carbon dioxide.

(11C) The carbon material manufacturing system according to (10C), further comprising a separation unit configured to be provided between the gas supply unit and the first reaction unit and separate the carbon dioxide from the source gas.

(12C) The carbon material manufacturing system according to (11C), wherein the gas supply unit is a furnace associated with a smelting plant.

(13C) The carbon material manufacturing system according to (12C), wherein the furnace associated with a smelting plant is a blast furnace.

(14C) A carbon material manufacturing method, comprising: a first generation step of generating carbon monoxide from carbon dioxide; and a second generation step of generating a carbon material from the carbon monoxide; wherein a content of a solid impurity in the carbon material is 1% by mass or less.

(1D) A carbon cycle system, comprising: a first reaction unit configured to generate carbon monoxide from carbon dioxide; a second reaction unit configured to generate a carbon material from the carbon monoxide; and a smelting furnace configured to be supplied with mineral ore together with the carbon material and smelt the mineral ore, wherein the first reaction unit has at least one reactor which accommodates a reduced object that converts carbon dioxide into carbon monoxide by a reduction reaction caused by the contact with exhaust gas, and can separate at least a part of oxygen elements eliminated from the carbon dioxide in a system of the reduction reaction, the reduced object is a reductant which reduces the carbon dioxide by contact with the exhaust gas so as to convert the carbon dioxide into carbon monoxide and convert itself into an oxidized state, and the reductant in the oxidized state is a reductant which is reduced by contact with reduction gas that contains a reductant material.

(2D) The carbon cycle system according to (1D), wherein the carbon material in a state of being supported on the mineral ore is supplied to the smelting furnace.

(3D) The carbon cycle system according to (1D) or (2D), further comprising a compression unit configured to compress the carbon material so as to obtain a compressed product, wherein the compressed product is supplied to the smelting furnace together with the mineral ore.

(4D) The carbon cycle system according to any one of (1D) to (3D), further comprising a separation unit configured to be provided on an upper stream side of the first reaction unit and separate the carbon dioxide from the exhaust gas.

(5D) The carbon cycle system according to any one of (1D) to (4D), wherein the exhaust gas is gas discharged from a smelting furnace that is identical to the said smelting furnace.

(6D) The carbon cycle system according to any one of (1D) to (5D), wherein the first reaction unit includes a plurality of the reactor, and the material gas and the reductant gas are switched to be supplied to each of the reactor.

(7D) The carbon cycle system according to (6D), configured to separate: the exhaust gas after passing through the reactor; and the reductant gas after passing through the reactor.

(8D) The carbon cycle system according to (7D), wherein the exhaust gas after passing through the reactor is supplied to the second reaction unit.

(9D) The carbon cycle system according to any one of (1D) to (8D), further comprising a collection unit configured to collect the carbon material from gas generated by the second reaction unit.

(10D) The carbon cycle system according to (9D), wherein the second reaction unit generates carbon dioxide in addition to the carbon material from the carbon monoxide, the carbon material manufacturing apparatus further comprising a return gas line configured to: connect the collection unit and the first reaction unit; and return gas after the collection of the carbon material by the collection unit to the first reaction unit.

(11D) A carbon cycle method, comprising: a first generation step of generating carbon monoxide from carbon dioxide contained in exhaust gas; a second generation step of generating a carbon material from the carbon monoxide; and a smelting step including supplying mineral ore together with the carbon material and smelting the mineral ore, wherein the first generation step is performed by using at least one reactor which accommodates a reduced object that converts the carbon dioxide into carbon monoxide by a reduction reaction caused by the contact with the exhaust gas, and can separate at least a part of oxygen elements eliminated from the carbon dioxide in a system of the reduction reaction, the reduced object is a reductant which reduces the carbon dioxide by contact with the exhaust gas so as to convert the carbon dioxide into the carbon monoxide and convert itself into an oxidized state, and the reductant in the oxidized state is a reductant which is reduced by contact with reduction gas that contains a reductant material.

Of course, the present disclosure is not limited to the above.

Various embodiments of the present disclosure have been described above, but these are presented as examples and are not intended to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the invention described in claims and the equivalent scope thereof.

For example, as compared to the above embodiments, the carbon material manufacturing apparatus, the carbon material manufacturing system and the carbon cycle system according to the present disclosure may have any other additional configuration, may have a configuration replaced with any configuration configured to exhibit the similar function, and may be configured with a part of a configuration omitted.

In addition, the carbon material manufacturing method and the carbon cycle method according to the present disclosure may have any other additional step, may have a step replaced with any step exhibiting the similar function, and may have a part of a step omitted.

In the above-described embodiment, the gas containing hydrogen was explained as a representation of the reductant gas, but as a replace of or in addition to the hydrogen, gas containing at least one kind selected from hydrocarbon (e.g., methane, ethane, acetylene, etc.) and ammonia can also be used for the reductant gas as the reductant material.

In addition, the first reactor in the present disclosure may be a reaction apparatus configured not to separate at least a part of the oxygen elements, which have been eliminated from the carbon dioxide by the reduction reaction, in the system of the reduction reaction.

Such a reactor may be, for example, an apparatus utilizing a reverse water-gas shift reaction that allows the carbon dioxide and the hydrogen to contact the reductant 4R simultaneously to convert the carbon dioxide into carbon monoxide and convert the hydrogen (reductant material) into water.

In this reactor, at least a part of the oxygen elements, which have been eliminated from the carbon dioxide, reacts with the hydrogen so as to generate water, without being separated from the system of the reduction reaction (reaction field).

However, if using the above-described reactor that can separate at least a part of the oxygen elements eliminated from the carbon dioxide in the system of the reduction reaction (reaction field), the carbon monoxide and the water, which are the reaction products, are hard to coexist in the system, whereby the decrease of the conversion efficiency of the carbon dioxide into the carbon monoxide due to the restriction by the chemical equilibrium can be prevented or suppressed.

In addition, the carbon material manufacturing system 10 (carbon material manufacturing apparatus 100) may adopt the above-described arbitrary configurations of the first to seventh embodiments in combination.

For example, the first reaction unit 4 can be constituted of the electrochemical cell as shown in FIG. 5, and the second reaction unit 5 can be constituted of the reactor that causes the reaction represented by above Formula 5.

In addition, the carbon cycle system 1000 may adopt the above-described arbitrary configurations of the first to fourth embodiments and the electrochemical cell as shown in FIG. 5 in combination.

For example, the first reaction unit 4 can be constituted of the electrochemical cell as shown in FIG. 5, and the second reaction unit 5 can be constituted of the reactor that causes the reaction represented by above Formula 5.

### [Description of Sign]

10:carbon material manufacturing system
100: carbon material manufacturing apparatus
1000: carbon cycle system
1: exhaust gas supply unit
101: blast furnace (gas supply unit)
2: reductant gas supply unit
3: gas switching unit
4: first reaction unit
4a: first reactor
4b: first reactor
41: pipe
42: housing
421a : cathode-side inlet port
421b : cathode-side outlet port
422a : anode-side inlet port
422b : anode-side outlet port
43: internal space
45: cathode
46: anode
47: solid electrolyte layer
48: power supply
4R: reductant
5: second reactor (second reaction unit)
6: product gas discharge unit
60: product gas supply unit
8: pressure adjustment unit
9: collection unit
11: separation unit
12: compression unit
GL1: gas line
GL2: gas line
GL3a : gas line
GL3b : gas line
GL4: gas line
GL4a : gas line
GL4b : gas line
GL5: gas line
GL6: gas line
GL6a : gas line
GL6b : gas line
GL7: return gas line
GL8: return gas line
GL70 : gas line
J: gas merge junction
J1: gas merge junction

## Claims

1. A carbon material manufacturing apparatus, comprising:
a first reaction unit configured to generate carbon monoxide from carbon dioxide;
a second reaction unit configured to generate a carbon material from the carbon monoxide; and
a gas line connecting the first reaction unit and the second reaction unit, wherein
the first reaction unit includes at least one reactor storing a reductant,
the reductant is allowed to contact source gas containing the carbon dioxide so as to reduce the carbon dioxide to convert the carbon dioxide into the carbon monoxide and to convert the reductant itself into an oxidized state, and
the reductant in the oxidized state is reduced by contact with reduction gas that contains a reductant material.

2. The carbon material manufacturing apparatus according to claim 1, wherein
the first reaction unit includes a plurality of the reactor, and
the material gas and the reductant gas are switched to be supplied to each of the reactor.

3. The carbon material manufacturing apparatus according to claim 2, configured to separate: the source gas after passing through the reactor; and the reductant gas after passing through the reactor.

4. The carbon material manufacturing apparatus according to claim 3, wherein the source gas after passing through the reactor is supplied to the second reaction unit.

5. The carbon material manufacturing apparatus according to any one of claims 1 to 4, further comprising
a collection unit configured to collect the carbon material from gas generated by the second reaction unit.

6. The carbon material manufacturing apparatus according to claim 5, wherein
the second reaction unit generates carbon dioxide in addition to the carbon material from the carbon monoxide,
the carbon material manufacturing apparatus further comprising a return gas line configured to: connect the collection unit and the first reaction unit; and return gas after the collection of the carbon material by the collection unit to the first reaction unit.

7. The carbon material manufacturing apparatus according to any one of claims 1 to 6, further comprising
a pressure adjustment unit configured to be provided in middle of the gas line and increase pressure of gas passing through the gas line.

8. The carbon material manufacturing apparatus according to claim 7, wherein
pressure of the gas after being pressurized by the pressure adjustment unit is 0.1 MPaG or more.

9. The carbon material manufacturing apparatus according to claim 7 or 8, wherein
a second reaction temperature in the second reaction unit is lower than a first reaction temperature in the first reaction unit.

10. The carbon material manufacturing apparatus according to claim 9, wherein
the second reaction temperature is 850°C or less.

11. A carbon material manufacturing system, comprising:
the carbon material manufacturing apparatus according to any one of claims 1 to 10; and
a gas supply unit configured to be connected to the carbon material manufacturing apparatus and supply source gas containing carbon dioxide.

12. A carbon cycle system, comprising:
the carbon material manufacturing apparatus according to any one of claims 1 to 10; and
a smelting furnace configured to be supplied with mineral ore together with the carbon material and smelt the mineral ore, wherein
the first reaction unit is configured to generate the carbon monoxide from the carbon dioxide contained in exhaust gas.

13. The carbon cycle system according to claim 12, wherein
the carbon material in a state of being supported on the mineral ore is supplied to the smelting furnace.

14. The carbon cycle system according to claim 12 or 13, further comprising
a compression unit configured to compress the carbon material so as to obtain a compressed product, wherein
the compressed product is supplied to the smelting furnace together with the mineral ore.

15. The carbon cycle system according to any one of claims 12 to 14, further comprising
a separation unit configured to be provided on an upper stream side of the first reaction unit and separate the carbon dioxide from the exhaust gas.

16. The carbon cycle system according to any one of claims 12 to 15, wherein
the exhaust gas is gas discharged from a smelting furnace that is identical to the said smelting furnace.

17. A carbon material manufacturing method, comprising:
a first generation step of generating carbon monoxide from carbon dioxide; and
a second generation step of generating a carbon material from the carbon monoxide; wherein
the first generation step includes:
allowing source gas that contains the carbon dioxide to contact a reductant so as to reduce the carbon dioxide to convert the carbon dioxide into the carbon monoxide and to convert the reductant into an oxidized state; and
allowing reductant gas that contains a reductant material to contact the reductant in the oxidized state so as to reduce the reductant.

18. The carbon material manufacturing method according to claim 17, further comprising
a pressure adjustment step of increasing pressure of gas generated in the first generation step, in advance of the second generation step.

19. A carbon cycle method, comprising:
the carbon material manufacturing method according to claim 17; and
a smelting step including supplying mineral ore together with the carbon material that is generated in the second generation step, and smelting the mineral ore.
